# EUROPEAN PATENT APPLICATION

(11) **EP 4 559 608 A1**
(43) Date of publication of application: **28.05.2025**
(21) Application number: 22957468.6
(22) Date of filing: 02.09.2022
(51) Int. Cl.: B23H 1/08

(54) **ELECTRIC DISCHARGE MACHINING DEVICE**

(71) Applicant: FANUC CORPORATION, Oshino-mura Minamitsuru-gun Yamanashi 401-0597 (JP)
(72) Inventor: KASAI, Hirotsugu, 401-0597 Yamanashi (JP); MAKINO, Yoshinori, 401-0597 Yamanashi (JP)
(74) Representative: Keil & Schaafhausen Patentanwälte PartGmbB
(86) International application number: PCT/JP2022/033154
(87) International publication number: WO 2024/047874

(57) **Abstract**

A wire electric discharge machining device (10) according to an aspect of the present disclosure is for electric discharge machining of an aluminum-based material, wherein a machining fluid used in electric discharge machining contains at least one kind of cation from among potassium ions, calcium ions, sodium ions and magnesium ions and at least one kind of anion from among sulfate ions, sulfite ions, disulfite ions, hydrogen sulfite ions, hydroxide ions, nitrate ions and nitrite ions.

## Description

### TECHNICAL FIELD

The present disclosure relates to an electric discharge machine (electric discharge machining device).

### BACKGROUND ART

WO 2006/126248 A1 discloses an electric discharge machine.

### SUMMARY OF THE INVENTION

Recently, there is a demand for further improved electric discharge machines.

An aspect of the present disclosure is an electric discharge machine that performs electric discharge machining on an aluminum-based material, wherein a working fluid that is used during the electric discharge machining performed by the electric discharge machine contains: one or more kinds of cations selected from among potassium ion, calcium ion, sodium ion, and magnesium ion; and one or more kinds of anions selected from among sulfate ion, sulfite ion, disulfite ion, bisulfite ion, hydroxide ion, nitrate ion, and nitrite ion.

### BRIEF DESCRIPTION OF DRAWINGS

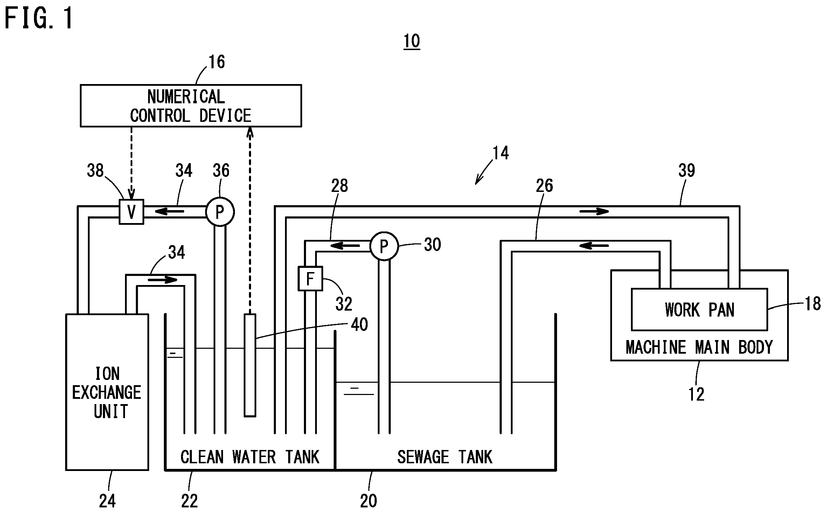

[FIG. 1] FIG. 1 is a schematic diagram showing a wire electric discharge machine.

### DETAILED DESCRIPTION OF THE INVENTION

An electric discharge machine filters a working fluid (dielectric working fluid) that has been used in machining, with a filter. Sludge and the like are removed from the working fluid by filtration, and the sludge and the like contained in the working fluid adheres to the filter. The electric discharge machine reuses the filtered working fluid. When the pressure required for the working fluid to pass through the filter becomes equal to or higher than a predetermined value, the operator needs to replace the filter. Therefore, the electric discharge machine is required to have a filter with a long life time. The life time of the filter herein means a period from when a filter is replaced with a new filter to when the pressure required for the working fluid to pass through the filter reaches a predetermined value or more.

The life time of the filter in the case where the electric discharge machine machines an aluminum-based material is shorter than the life time of the filter in the case where the electric discharge machine machines an iron-based material. For example, when the wire electric discharge machine machines an iron material and an aluminum material having the same plate thickness, the life time of the filter when the aluminum material is machined is 10% to 25% of the life time of the filter when the iron material is machined.

Therefore, when an aluminum-based material is machined by the electric discharge machine, there is a problem that the number of the discarded filter increases. The present disclosure aims to extend the life time of such a filter.

### [First Embodiment]

### [Configuration of Wire Electric Discharge Machine]

FIG. 1 is a schematic diagram showing a wire electric discharge machine 10. The wire electric discharge machine 10 includes a machine main body 12, a dielectric fluid unit 14, and a numerical control device 16. The wire electric discharge machine 10 corresponds to an electric discharge machine of the present invention.

The machine main body 12 includes a work pan 18. The machine main body 12 performs electric discharge machining on a workpiece in a state in which the working fluid is stored in the work pan 18.

The dielectric fluid unit 14 has a sewage tank 20, a clean water tank 22, and an ion exchange unit 24.

The sewage tank 20 is connected to the work pan 18 via a drainage path 26. The working fluid is discharged from the work pan 18 to the sewage tank 20. The working fluid discharged from the work pan 18 to the sewage tank 20 contains sludge and the like generated during electric discharge machining of the workpiece.

The sewage tank 20 is connected to the clean water tank 22 via a filtration path 28. The filtration path 28 is provided with a first pump 30 and a filter 32. The first pump 30 pumps up the working fluid in the sewage tank 20 and sends it to the clean water tank 22. The filter 32 filters the working fluid sent from the sewage tank 20 to the clean water tank 22, and removes sludge and the like from the working fluid.

The clean water tank 22 is connected to the ion exchange unit 24 via a circulation path 34. A second pump 36 and a valve 38 are provided in the circulation path 34. The ion exchange unit 24 has an ion exchange resin therein. The second pump 36 circulates the working fluid between the clean water tank 22 and the ion exchange unit 24. The ion exchange resin exchanges ions contained in the working fluid passing through the ion exchange resin with other ions. This increases the resistivity value of the working fluid.

The work pan 18 is connected to the clean water tank 22 by a supply path 39. The working fluid whose resistivity value has been adjusted is supplied to the work pan 18.

The valve 38 adjusts the amount of the working fluid circulating between the clean water tank 22 and the ion exchange unit 24.

The numerical control device 16 controls the machine main body 12. The numerical control device 16 controls the opening degree or the opening time of the valve 38 in accordance with the resistivity value of the working fluid measured by a resistivity value measurement unit 40. The resistivity value measurement unit 40 measures the resistivity value of the working fluid stored in the clean water tank 22. Thus, the resistivity value of the working fluid in the clean water tank 22 is maintained at a predetermined value.

### [Ions contained in Working Fluid]

The working fluid used in the wire electric discharge machine 10 of the present disclosure contains one or more kinds of ions among the following cations. The cations are potassium ion, calcium ion, sodium ion, and magnesium ion.

Further, the working fluid used in the wire electric discharge machine 10 of the present disclosure contains one or more kinds of ions among the following anions. The anions are sulfate ion, sulfite ion, disulfite ion, bisulfite ion (hydrogen sulfite ion), hydroxide ion, nitrate ion, and nitrite ion.

The following ions of the ions described above are ions contained in the working fluid by chemical agents being added to the working fluid. The ions are potassium ion, calcium ion, sodium ion, magnesium ion, sulfate ion, sulfite ion, disulfite ion, bisulfite ion, hydroxide ion, nitrate ion, and nitrite ion.

The chemical agent to be added is, for example, as follows. The chemical agent is sodium hydrogen sulfite (sodium bisulfite), sodium carbonate, sodium sulfate, calcium hydroxide, sodium disulfite (sodium pyrosulfite), potassium disulfite (potassium pyrosulfite), magnesium sulfate, magnesium sulfate heptahydrate, or the like.

Of the ions described above, sodium ion and hydroxide ion are contained in the working fluid by passing the working fluid through the ion exchange resin of the ion exchange unit 24.

In the ion exchange unit 24, an ion exchange resin having a carboxyl group or a sulfonic acid group as an exchange group may be used as a cation exchange resin. In the ion exchange unit 24, an ion exchange resin into which an amino group is incorporated as a functional group may be used as an anion exchange resin.

In the wire electric discharge machine 10 of the present disclosure, when a workpiece made of an aluminum-based material is subjected to electric discharge machining, aluminum oxide and aluminum oxide trihydrate are generated.

In the wire electric discharge machine 10, the working fluid after machining contains copper ion, zinc ion, hydrogen ion, and hydroxide ion. In the wire electric discharge machine 10 of the present disclosure, copper ion, zinc ion, hydrogen ion, and hydroxide ion are not removed.

### [Experimental Results]

The inventors of the present application conducted an experiment to determine the life time of the filter 32 by performing electric discharge machining using a plurality of kinds of working fluids containing different ions.

It was confirmed that the life time of the filter 32 is extended when the working fluid contains any one of potassium ion, calcium ion, sodium ion, magnesium ion, hydrogen ion, sulfate ion, sulfite ion, bisulfite ion, and hydroxide ion.

On the other hand, it was not confirmed that the life time of the filter 32 is prolonged when the working fluid contains chloride ion.

Further, it was not confirmed that the life time of the filter 32 is extended when the working fluid contains both hydrogen ion and hydroxide ion.

When sodium hydrogen sulfite is added to the working fluid, aluminum oxide and aluminum oxide trihydrate are produced in the working fluid during electric discharge machining of an aluminum-based material. On the other hand, when sodium hydrogen sulfite is not added to the working fluid, aluminum hydroxide is produced in the working fluid during electric discharge machining of an aluminum-based material. It is considered that, by adding sodium hydrogen sulfite to the working fluid, aluminum oxide and aluminum oxide trihydrate are generated, instead of aluminum hydroxide which shortens the life time of the filter 32.

### [Operations and Effects]

When an aluminum-based material is machined by the wire electric discharge machine 10, aluminum hydroxide is generated in a conventional working fluid. The surface of aluminum hydroxide is sticky. Therefore, the mesh of the filter 32 is likely to be clogged with the aluminum hydroxide, and the life time of the filter 32 is shortened. When the life time of the filter 32 is shortened, there is a problem that the number of the discarded filter 32 increases. Therefore, in the wire electric discharge machine 10, the filter 32 is required to have a long life time even when the wire electric discharge machine 10 performs electric discharge machining on an aluminum-based material.

In the wire electric discharge machine 10 of the present embodiment, the working fluid used during electric discharge machining contains one or more kinds of cations among the following cations. The cations are potassium ion, calcium ion, sodium ion, and magnesium ion. Further, the working fluid used during electric discharge machining contains one or more kinds of anions among the following anions. The anions are sulfate ion, sulfite ion, disulfite ion, bisulfite ion, hydroxide ion, nitrate ion, and nitrite ion. Thus, the wire electric discharge machine 10 can extend the life time of the filter 32.

In the wire electric discharge machine 10 of the present embodiment, the following ions are contained in the working fluid by the chemical agent being added to the working fluid. The ions are potassium ion, calcium ion, sodium ion, magnesium ion, sulfate ion, sulfite ion, disulfite ion, bisulfite ion, hydroxide ion, nitrate ion, and nitrite ion. This makes it possible to incorporate these ions into the working fluid by a simple method.

In the wire electric discharge machine 10 of the present embodiment, the following ions are contained in the working fluid by passing the working fluid through the ion exchange resin. The ions are sodium ion and hydroxide ion. This makes it possible to incorporate these ions into the working fluid by a simple method.

In addition, the wire electric discharge machine 10 of the present embodiment performs electric discharge machining on an aluminum-based material, thereby generating aluminum oxide and aluminum oxide trihydrate. Thus, the wire electric discharge machine 10 can extend the life time of the filter 32.

The following Supplementary Notes are further disclosed in relation to the above embodiment.

### (Supplementary Note 1)

An electric discharge machine (10) for electric discharge machining on an aluminum-based material, wherein a working fluid that is used during the electric discharge machining performed by the electric discharge machine contains one or more kinds of cations selected from among potassium ion, calcium ion, sodium ion, and magnesium ion, and one or more kinds of anions selected from among sulfate ion, sulfite ion, disulfite ion, bisulfite ion, hydroxide ion, nitrate ion, and nitrite ion. Thus, the electric discharge machine can extend the life time of the filter.

### (Supplementary Note 2)

In the electric discharge machine according to Supplementary Note 1, the potassium ion, the calcium ion, the sodium ion, the magnesium ion, the sulfate ion, the sulfite ion, the disulfite ion, the bisulfite ion, the hydroxide ion, the nitrate ion, and the nitrite ion, which are contained in the working fluid used during the electric discharge machining performed by the electric discharge machine, may be ions that are contained in the working fluid by adding the chemical agent to the working fluid. This makes it possible to incorporate these ions into the working fluid by a simple method.

### (Supplementary Note 3)

In the electric discharge machine according to Supplementary Note 1 or 2, the electric discharge machine may include the ion exchange resin, and the sodium ion and the hydroxide ion contained in the working fluid used during the electric discharge machining performed by the electric discharge machine may be ions that are contained in the working fluid by passing the working fluid through the ion exchange resin. This makes it possible to incorporate these ions into the working fluid by a simple method.

### (Supplementary Note 4)

In the electric discharge machine according to any one of Supplementary Notes 1 to 3, the electric discharge machine may perform the electric discharge machining on the aluminum-based material to thereby generate aluminum oxide and aluminum oxide trihydrate. Thus, the electric discharge machine can extend the life time of the filter.

Although the embodiments of the present disclosure have been described in detail, the present disclosure is not limited to the above-described embodiments. Various additions, substitutions, modifications, partial deletions, and the like can be made to these embodiments without departing from the essence and gist of the invention, or without departing from the idea and purpose of the present invention derived from the content described in the claims and equivalents thereof. For example, in the above-described embodiments, the order of operations and the order of processes are shown as examples, and the present invention is not limited to them. The same applies to a case where numerical values or mathematical equations are used in the description of the above-described embodiments.

### REFERENCE SIGNS LIST

10: wire electric discharge machine

## Claims

1. An electric discharge machine (10) for performing electric discharge machining on an aluminum-based material, wherein
a working fluid that is used during the electric discharge machining includes:
one or more kinds of cations selected from among potassium ion, calcium ion, sodium ion, and magnesium ion; and
one or more kinds of anions selected from among sulfate ion, sulfite ion, disulfite ion, bisulfite ion, hydroxide ion, nitrate ion, and nitrite ion.

2. The electric discharge machine according to claim 1, wherein
the potassium ion, the calcium ion, the sodium ion, the magnesium ion, the sulfate ion, the sulfite ion, the disulfite ion, the bisulfite ion, the hydroxide ion, the nitrate ion, and the nitrite ion are ions that are contained in the working fluid by adding a chemical agent to the working fluid.

3. The electric discharge machine according to claim 1 or 2, wherein
the electric discharge machine comprises an ion exchange resin, and
wherein the sodium ion and the hydroxide ion are ions that are contained in the working fluid by passing the working fluid through the ion exchange resin.

4. The electric discharge machine according to any one of claims 1 to 3, wherein
aluminum oxide and aluminum oxide trihydrate are generated by performing the electric discharge machining on the aluminum-based material.
